Europäisches Patentamt

European Patent Office

Office européen des brevets

(19)

(11) **EP 1 043 117 A2**

(12) **EUROPEAN PATENT APPLICATION**

(43) Date of publication:
**11.10.2000 Bulletin 2000/41**

(51) Int Cl.[7]: **B23Q 3/18**, B23Q 3/04,
B23Q 17/22

(21) Application number: **99116311.4**

(22) Date of filing: **19.08.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Yodoshi, Tatsuo, c/o Fuji Seiki Co., Ltd.**<br>**Kashihara-shi, Nara 634-0847 (JP)** |
| (30) Priority: **07.04.1999 JP 10038499** | (74) Representative: **Steil, Christian, Dipl.-Ing.**<br>**Witte, Weller & Partner,**<br>**Postfach 10 54 62**<br>**70047 Stuttgart (DE)** |
| (71) Applicant: **Fuji Seiko Co. Ltd.**<br>**Kashihara-shi, Nara 634-0847 (JP)** | |

(54) **Work position adjusting apparatus and adjusting method**

(57)    A base (2) is fixed to a work table (31) of a machine tool (30). By adjusting the position of a mounting member (3) corresponding to the base (2), the position of a work (W) fixed to a mounting surface (3a) of the mounting member (3) is adjusted. The work (W), together with an X-axis moving table (43) of the machine tool (30), is moved by a very small amount in a state where a test indicator (46) mounted on a tool head (44) is brought into contact with a work surface (Wa) of the work (W). An operator grasps an inclination of the work surface (Wa) relative to the X-axis while seeing the displacement of a pointer of the test indicator (46). When a first execute switch (67) is turned on after an amount of correction required to cancel the inclination is manually set by a first correction amount adjusting switch (64), first driving and fixing members (4A, 4B, 4C) drive the mounting member (3) by an amount contributing to cancellation of the inclination of the work surface (Wa) relative to the X-axis. An inclination of the work surface (Wa) relative to the Y-axis is corrected by the same operation, to correct an inclination of a plane (Wb) perpendicular to the work surface (Wa) relative to the X-axis (Fig. 1).

F I G. 1

EP 1 043 117 A2

## Description

BACKGROUND OF THE INVENTION

Field of the Invention

The present invention relates to a work position adjusting apparatus and a work position adjusting method for correcting an error in an inclination of a work surface, for example, of a work, and an error in rotation along the work surface, for example, on a work table of a machine tool.

Description of Related Arts

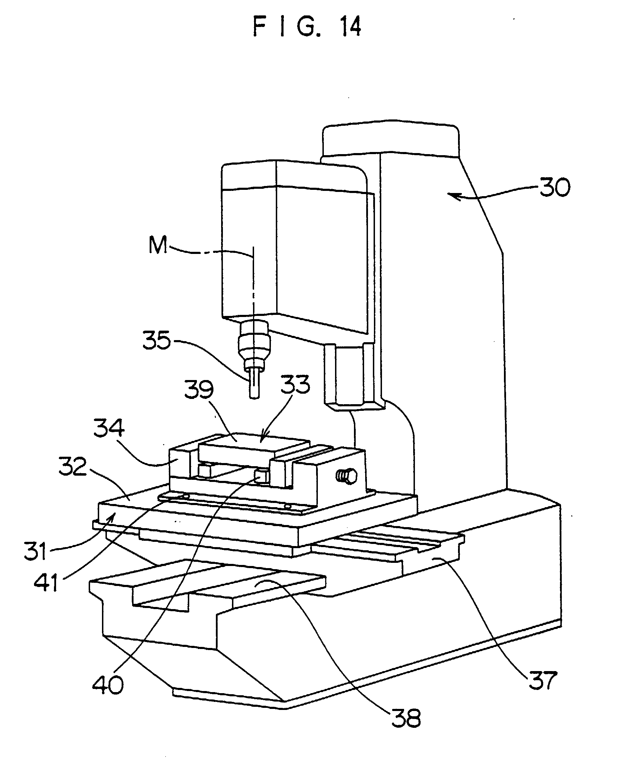

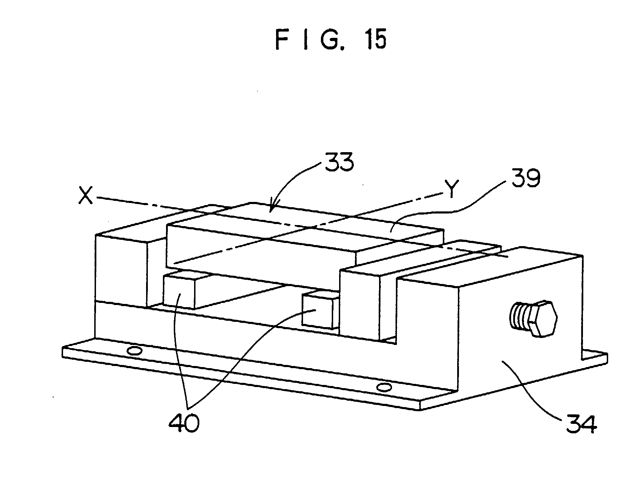

Referring to Figs. 14 and 15, reference numeral 30 denotes a machine tool such as an NC milling cutter. Reference numeral 31 denotes a work table on which a work is carried. An upper surface 32 of the work table 31 is basically parallel to an X-Y motion plane (hereinafter merely referred to as an X - Y plane) of a machine. In the case of Fig. 14, the work table 31 is movable, being guided by an X-axis guide rail 37 and a Y-axis guide rail 38 on the X - Y plane of the machine. A work 33 is carried and fixed on the upper surface 32 of the work table 31 directly or through a work supporting device 34 such as a vice. A cutting tool 35 is mounted on a spindle and is rotated around a spindle center M, to cut the work 33.

Referring to Fig. 15, at this time, a work surface 39 of the work 33 must be set in a correct positional relationship with the X - Y plane of the machine. In order to simplify the description, a case where the work surface 39 of the work 33 should be parallel to the X - Y plane will be thereafter premised. In this case, in such working that precision on the order of microns is required, the work surface 39 is not necessarily completely parallel to the X - Y plane only by merely mounting the work 33 directly or through the work supporting device 34. The work surface 39 is not necessarily completely parallel to the X - Y plane because of accumulated various errors such as an error in an inclination of a surface of the work table 31 itself and an error caused by the work supporting device 34, and so generally has an error in an inclination on the order of microns. The work 33 has an error in rotation around an axis perpendicular to the X - Y plane. In either case, it is preferable that the error in the inclination and the error in the rotation are brought as near zero as possible.

In the prior art, after the error in the inclination of the work surface 39 of the work 33 is measured prior to the working, the inclination is adjusted by lightly tapping a part of the work surface 39 or spreading a thin metal foil between a part of the bottom of the work 33 and a base metal 40, for example. The error in the inclination on the order of microns is forced into zero while repeating such an operation as to measure the error in the inclination again and further similarly correcting the error in the inclination.

The error in the degree of parallelization (corresponding to the above-mentioned error in the rotation) is then measured, and is measured again after slightly loosening a bolt 41 for fixing the work supporting device 34 on the work table 31, and lightly tapping a side part of the work supporting device 34 to finely adjust the degree of parallelization of the work supporting device 34. The error in the degree of parallelization (the error in the rotation) on the order of microns is brought near zero by repeating such an operation.

The operations are very troublesome, and the efficiency of the operations significantly depends on the skill of a worker.

Therefore, the inventors of the present application have contrived an apparatus, in a machine tool incorporating correction means for correcting the position of a work and coordinate value detection means for detecting coordinates on a predetermined surface of the work, for operating a necessary amount of correction by the correction means depending on a coordinate value automatically detected and automatically making a correction (see JP-A-8-138075, for example).

The apparatus has the advantage that the position of the work can be completely automatically adjusted with high precision. However, an NC machine tool comprising high-grade operation and control functions such as automatic coordinate measurement and automatic work table feeding is a principal object. Therefore, it is difficult to say that the apparatus is suitable for a general-purpose machine tool.

SUMMARY OF THE INVENTION

An object of the present invention is to provide a work position adjusting apparatus and a work position adjusting method which can adjust the position of a work significantly simply, in a short time, and with high precision without depending on the skill of a worker, and can be utilized even by a general-purpose machine tool comprising no high-grade operation and control section.

In order to attain the above-mentioned object, in a preferred mode of the present invention, there is provided a work position adjusting apparatus for adjusting the position of a work having first and second surfaces crossing each other on the basis of first, second and third axes perpendicular to each other which are set in a machine tool with respect to a relative motion between a tool head and a work table. The work position adjusting apparatus comprises a base set on the work table, a mounting member on which the work is mounted, and supporting mechanisms interposed between the base and the mounting member for supporting the mounting member. The supporting mechanisms comprise first correction means for correcting an inclination of the first surface relative to a plane including the first and second axes by driving the mounting member in a direction parallel to the third axes, and second correction means for correcting an inclination of the second surface relative to the first axis by rotating the mounting member around an axis parallel to the third axis. Further, the work position adjusting apparatus further comprises control means for controlling the operation of each of the correction means, and manual adjustment means provided in correspondence with each of the correction means for manually adjusting an amount of correction by the correction means through the control means.

In the present embodiment, the work table on which the work is carried and a test indicator are relatively moved along the first, second, or third axis of the machine tool in a state where a probe of the test indicator is brought into contact with the first or second surface of the work. By reading the displacement of the test indicator at this time, it is possible to measure the inclination of the first or second surface of the work. An amount of correction sufficient to correct the measured inclination of the first or second surface of the work is manually adjusted using the corresponding manual adjustment means, to make the correction. The measurement and the correction are repeated a plurality of number of times, thereby completing the correction.

A person can adjust the position of the work simply, in a significantly short time, and with high precision even if he or she is not a skilled person. Particularly, the surface of the work is corrected on the basis of a motion axis of the machine tool. Accordingly, the correction can be made with high precision without being affected by an error in mounting between the base and the work table. Further, the apparatus is high in versatility because it is simple in construction and low in cost and can adjust the position of the work by being mounted even on a general machine.

Correcting the inclination of the first surface of the work relative to the plane including the first and second axes (for example, an X - Y plane) means making a correction such that an angle between the first face and the plane becomes a required angle. The required angle also includes zero (that is, a case where the first face and the plane are parallel to each other). Further, the correction includes a case where the angle is so corrected as to fall within an allowable range including the required angle in addition to a case where it is strictly corrected to the required angle. The same is true for the correction of the inclination of the second surface of the work relative to the first or second axis. When the machine tool is an electric discharge machine, an electrode head for mounting an electrode shall correspond to a tool head.

The base may be or may not be shared by components such as the work table of the machine tool.

A more preferred embodiment of the present invention is characterized in that the manual adjustment means comprise manual setting means for manually setting the amount of correction by the corresponding correction means, and signal output means for outputting a trigger signal for executing a correction by the corresponding correction means by the amount of correction set using the manual setting means.

In the present embodiment, the amount of correction by each of the correction means is manually set, and control means which has received the trigger signal then individually executes the correction by the correction means.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic perspective view of a machine tool including a work position adjusting apparatus according to one embodiment of the present invention;
Fig. 2 is a side view of a principal part of a position adjusting device;
Fig. 3 is a plan view of the position adjusting device;
Fig. 4A is a diagram showing a first driving and fixing member serving as first correction means of the position adjusting device as viewed from the front, and Fig. 4B is a diagram showing a second driving and fixing member serving as second correction means of the position adjusting device as viewed from the front;
Figs. 5A and 5B are side views of a first driving and fixing member and its peripheral portion, where Fig. 5A illustrates a state where a pair of piezoelectric displacement elements is not energized, and Fig. 5B illustrates a state where a mounting member is held in its initial position by the pair of energized piezoelectric displacement elements;
Fig. 6 is a side view of a second driving and fixing member and its peripheral portion, which illustrates a state where a mounting member is held in its initial position by a pair of energized piezoelectric displacement elements;
Fig. 7 is a block diagram showing the main electrical configuration of the position adjusting apparatus;
Figs. 8A and 8B are graphs respectively showing the relationship between a voltage and a displacement in a pair of piezoelectric displacement elements, where Fig. 8A illustrates a case where no bias voltage is added, and Fig. 8B illustrates a case where a bias voltage is added;
Fig. 9 is a schematic view showing the positional relationship between a mounting surface and each of first driving and fixing members;
Fig. 10 is a flow chart showing the procedure for position adjustment;
Fig. 11 is a plan view of a position adjusting apparatus according to another embodiment of the present invention;

Fig. 12 is a cross-sectional view of a principal part of a position adjusting apparatus according to still another embodiment of the present invention;

Fig. 13 is a block diagram showing a principal part of the main electrical configuration of a position adjusting apparatus according to a further embodiment of the present invention;

Fig. 14 is a schematic perspective view of a conventional machine tool; and

Fig. 15 is a schematic perspective view of a conventional work supporting device.

## DETAILED DESCRIPTION OF THE PREFERRED EMBODIMENT

Preferred embodiments of the present invention will be described while referring to the accompanying drawings.

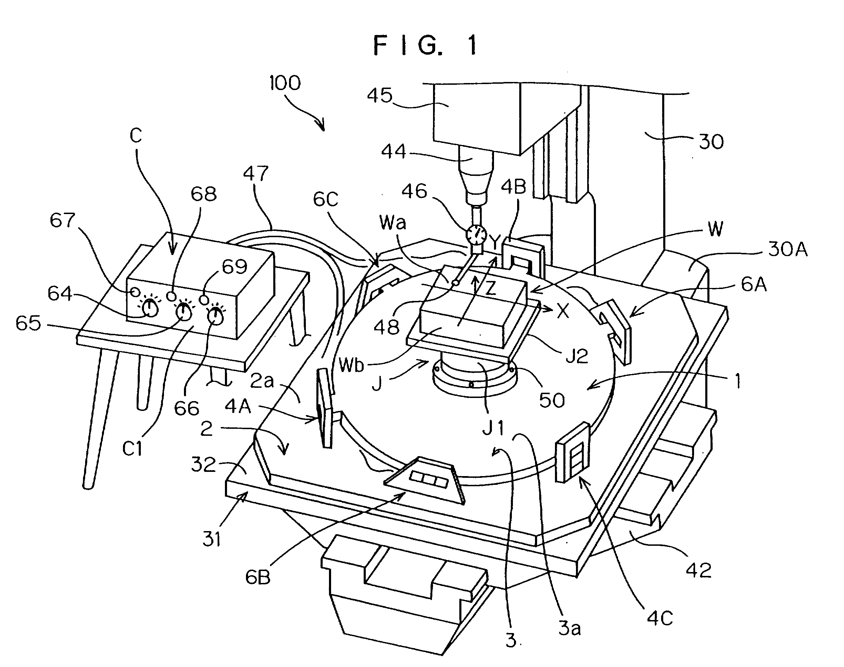

Referring to Fig. 1, a work position adjusting apparatus 100 (hereinafter merely referred to as a position adjusting apparatus 100) comprises a position adjusting device 1 fixed to an upper surface 32 serving as a reference surface of a work table 31 of a machine tool 30 using a fixing member such as a bolt, and a controller C. In the position adjusting apparatus 100, an inclination of a work surface Wa or the like of a work W is measured using a test indicator 46 mounted on a tool head 44, for example, and an operator turns each of manual setting sections 64, 65 and 66 of the controller C depending on a measured value, to correct the inclination of the work W.

The test indicator 46 comprises, for example, a dial gauge and has a probe, an end of which is in a spherical shape. An operator reads by eye measurement on a scale plate the displacement of a pointer in a case where the work W, together with the work table 31 also serving as an X-axis moving table, for example, is moved along the X-axis in a state where the probe 48 is brought into contact with an arbitrary position of the work surface Wa of the work W, to grasp an inclination of the work surface Wa relative to the X-axis. Similarly, the operator reads the displacement of the pointer when the work W is moved along the Y-axis, to grasp an inclination of the work surface Wa relative to the Y-axis.

The operator reads the displacement of the pointer when the work W is moved along the X-axis in a state where the probe 48 is brought into contact with an arbitrary position of a plane Wb, serving as a parallelization reference surface, of the work W, to grasp an inclination of the plane Wb relative to the X-axis. The test indicator 46 may be one of a digital type for digitally displaying a measured value.

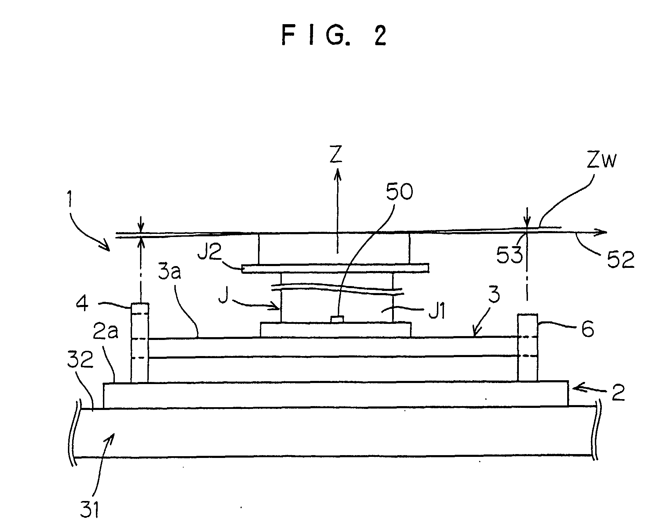

Referring to Figs. 2, 3, 4A and 4B, the position adjusting device 1 comprises a base 2 in a rectangular plate shape which is fixed to the work table 31, and a mounting member 3 in a disc shape having a mounting surface 3a approximately parallel to an upper surface 2a of the base 2. The X-axis, the Y-axis and the Z-axis in the drawings are reference axes of the machine tool 30. The same is true for the following description.

In Fig. 1, reference numeral 42 denotes a Y-axis moving table supported so as to be movable back and forth along the Y-axis by a main body 30A of the machine tool 30. The work table 31 also serving as an X-axis moving table is supported so as to be movable back and forth along the X-axis by the Y-axis moving table 42. The work table 31 serving as the X-axis moving table and the Y-axis moving table 42 are respectively driven by an X-axis servo motor and a Y-axis servo motor which are not illustrated.

On the other hand, the tool head 44 for mounting a tool and a supporting member 45 for supporting the tool head 44 are supported so as to be movable up and down along the Z-axis by the main body 30A, and the supporting member 45 is driven by a Z-axis servo motor which is not illustrated.

As shown in Fig. 1, the controller C is put on the upper surface of the table arranged beside the machine tool 30, to adjust the position of the mounting member 3 depending on a manual operation. An operation panel C1 is arranged on the surface of the controller C, and a microcomputer C2, described later, is mounted inside the controller C. A lead wire 47 from each of piezoelectric displacement elements, described later, is connected to the controller C.

The mounting member 3 may be supported by a spherical bearing with the spherical bearing interposed between the center of the mounting member 3 and the base 2. In the present embodiement, however, the spherical bearing is not provided, and the mounting member is supported in the vertical direction by first driving and fixing members 4A, 4B and 4C serving as at least three first correction means (hereinafter generally referred to as first driving and fixing member 4) and is supported in the direction of rotation by second driving and fixing members 6A, 6B and 6C servcing as at least one second correction means (hereinafter generally referred to as second driving and fixing member 6). In the present embodiment, the second driving and fixing members 6 are arranged at such positions as to divide the circumference of the mounting member 3 into three equal divisions, so that the work 3 can maintain a stable position even in a case where it receives a cutting load in the horizontal direction. The upper surface 2a and a lower surface of the base 2 are reference surfaces of the base 2, and the lower surface serving as the reference surface is fixed along the upper surface of the work table 31. Therefore, the upper surface 2a serving as the reference surface of the base 2 is also almost properly positioned.

Although the work W may be directly mounted on the mounting surface 3a of the mounting member 3, the work W is mounted on the mounting surface 3a through a centering positioning jig J, as shown in Fig. 2, in the present embodiment. That is, a main body J1 of the centering positioning jig J is clamped and fixed to the center of the mounting surface 3a of the mounting member 3 by a bolt 50, and a work base J2 on which the work W is put is inserted into the main body J1 by a fitting axis (not shown), so that the work W is in a predetermined position with respect to the mounting surface 3a of the mounting member 3.

When the work W is directly mounted on the mounting surface 3a, the work W may be put on the mounting surface 3a in a state where a corner of the work W is along a reference guide rail in an angle shape, for example, provided at a required position of the mounting surface 3a, to roughly position the work W. As means for fixing the work W to the mounting surface 3a, means for inserting a screw for work fixing into a tapped hole formed on the mounting surface 3a and pressing and fixing the work W on the mounting surface 3a can be exemplified. In a case where a load is hardly applied to the work W as by electric discharge machining, for example, it is also possible to bond and fix the work W to the mounting surface 3a using an adhesive such as an instantaneous adhesive.

There is a system for indirectly fixing the work W through a mounting vice (for example, one which is the same as that shown in the conventional example in Fig. 14) fixed to the mounting surface 3a in addition to a system of directly fixing the work W to the mounting surface 3a.

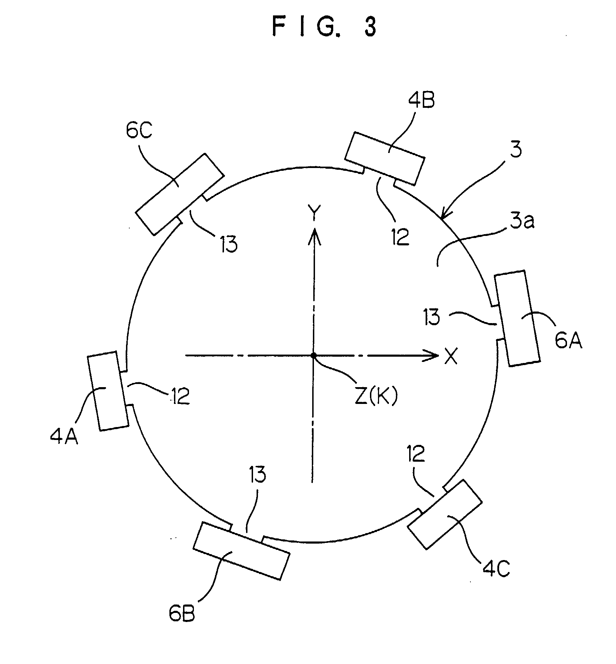

Referring to Fig. 3, the mounting member 3 is in a disc shape, and has driving projections 12 and 13 which are rectangular in cross section formed at its peripheral edge so as to project outward in alternate positions equally spaced on the circumference thereof. Each of the driving projections 12 is supported along the Z-axis by the first driving and fixing member 4 serving as the first correction means. Each of the driving projections 13 is supported in the direction of rotation around an axis K parallel to the Z-axis (the axis K is along the Z-axis in the present embodiment) by the second driving and fixing member 6 serving as the second correction means.

The driving and fixing members 4 respectively adjust the heights of portions on the circumference of the mounting member 3 through the driving projections 12, to adjust the inclinations of the work surface Wa on the mounting surface 3 relative to the X-axis and the Y-axis, and fix the inclinations to the adjusted state. On the other hand, the second driving and fixing members 6 respectively adjust the position where the mounting member 3 is rotated and therefore, the work W is rotated around the axis K through the driving projections 13. Specifically, they adjust the inclination of the surface Wb perpendicular to the work surface Wa relative to the X-axis (the degree of parallelization), and fix the inclination Wb to the adjusted state.

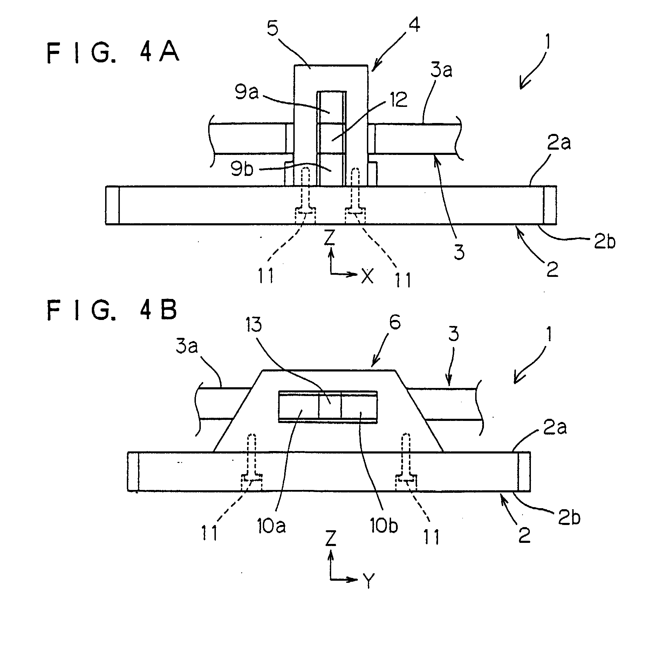

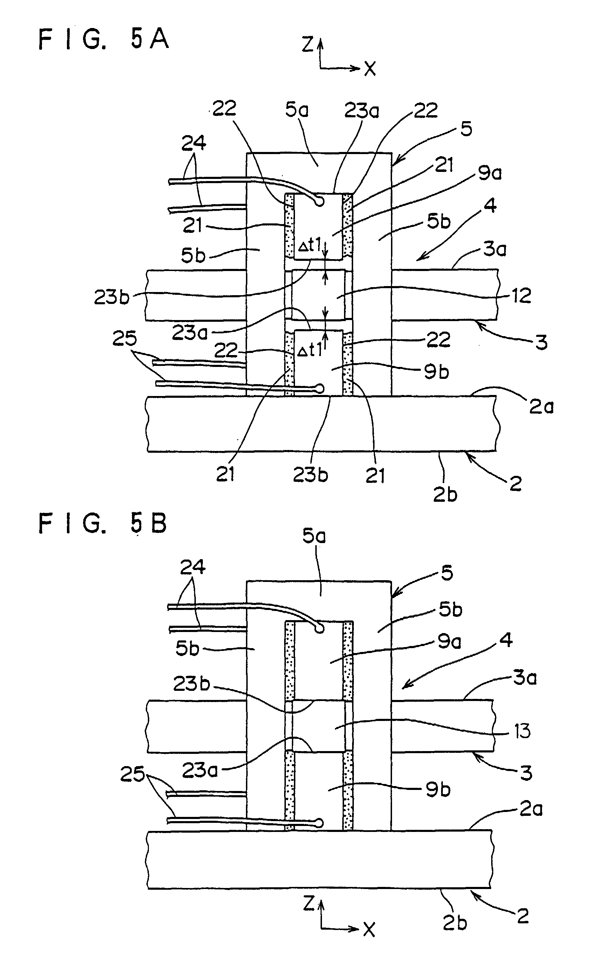

Referring to Figs. 4A and 5A, the first driving and fixing member 4 includes piezoelectric displacement elements 9a and 9b which are paired with each other. The piezoelectric displacement elements 9a and 9b are supported by a fixed frame 5 in a channel shape fixed to the upper surface 2a of the base 2 by screws 11. The fixed frame 5 comprises a transverse bar 5a parallel to the upper surface 2a of the base 2 and a pair of legs 5b connected to both ends of the transverse bar 5a. The driving projection 12 penetrates a space defined by the fixed frame 5 and the upper surface 2a of the base 2. The piezoelectric displacement elements 9a and 9b are respectively arranged above and below the driving projection 12 in the space.

The piezoelectric displacement element is constructed by laminating a plurality of piezoelectric elements having the property of expanding and contracting if a voltage is applied thereto. It is possible to obtain an amount of displacement corresponding to the applied voltage, and to obtain an arbitrary amount of displacement corresponding to the number of laminated piezoelectric elements. That is, when a large amount of displacement is required, a piezoelectric displacement element having a large number of laminated piezoelectric elements may be selected and used. When a required amount of displacement is small, a piezoelectric displacement element having a small number of laminated piezoelectric elements may be selected and used. The piezoelectric displacement element has sufficiently high rigidity to withstand a load of several hundred kilograms, and has a significantly fast displacement response to the applied voltage, although it is generally very small in shape, for example, approximately 10 mm x 10 mm x 18 mm. When it is necessary to receive a large load, a piezoelectric displacement element having a large load area may be used.

Referring to Figs. 5A and 5B, each of side surfaces 22 of each of the piezoelectric displacement elements 9a and 9b is fixed to the leg 5b through a layer 21 of an adhesive having elasticity such as an adhesive including silicone interposed between the side surface 22 and an inner surface, opposite thereto, of the leg 5b. Each of respective upper and lower surfaces 23a and 23b of the piezoelectric displacement elements 9a and 9b is not fixed to a surface opposite thereto. Even if the mounting member 3 is rotated by the second driving and fixing member 6, so that the driving projection 12 is subjected to a displacement in the horizontal direction, therefore, no useless stress is applied to the piezoelectric displacement elements 9a and 9b. In the drawings, reference numerals 24 and 25 denote lead wires for respectively applying driving voltages to the piezoelectric displacement elements 9a and 9b.

As described in the foregoing, each of the piezoelectric displacement elements 9a and 9b expands and contracts by application of the voltage. The lower piezoelectric displacement element 9b is contracted while expanding the upper piezoelectric displacement element 9a, to press the driving projection 12 downward in a state where it is interposed from above and below and displace the driving projection 12. Contrary to this, the upper piezoelectric displacement element 9a is contracted while expanding the lower piezoelectric displacement element 9b, to press the driving projection 12 upward in a state where it is interposed from above and below and displace the driving projection 12.

The inclination of the mounting member 3 relative to the X-axis and the inclination thereof relative to the Y-axis can be thus adjusted by the three first driving and fixing members 4. The inclinations of the mounting surface 3a of the mounting member 3 are thus adjusted in two directions perpendicular to each other, thereby making it possible to adjust an inclination of the work surface Wa corresponding to a first surface of the work W mounted on the mounting surface 3a. That is, the work surface Wa of the work W can be so adjusted as to be an X - Y plane.

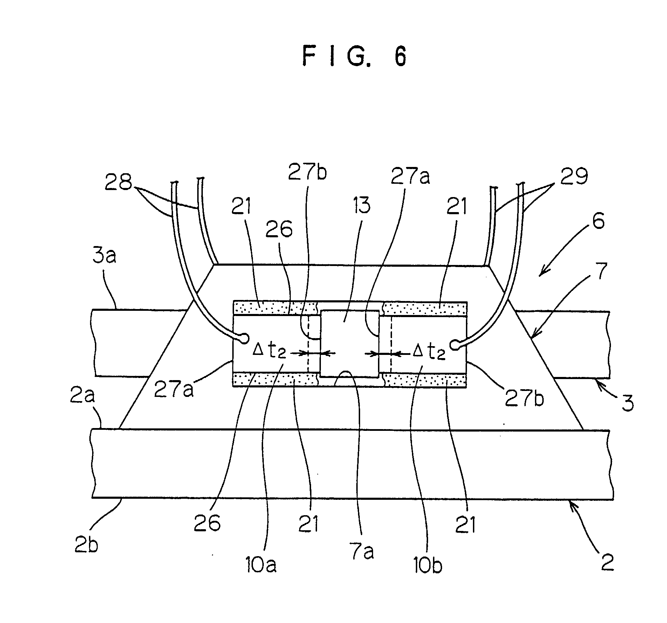

On the other hand, referring to Fig. 3, the driving projections 13 are respectively received by the second driving and fixing members 6. Referring to Figs. 4B and 6, each of the second driving and fixing members 6 comprises a pair of piezoelectric displacement elements 10a and 10b, and the piezoelectric displacement elements 10a and 10b are supported by a trapezoidal fixed frame 7. Fig. 6 illustrates a state where the driving projection 13 is at the center in the lateral direction of a through hole 7a, described later, with respect to the fixed frame 7. In Fig. 6, a position indicated by a broken line is the position of an end surface of each of the piezoelectric displacement elements 10a and 10b in a state where no voltage is applied thereto.

The fixed frame 7 is fixed to the upper surface 2a of the base 2 by screws 11, as shown in Fig. 4B, and has the rectangular through hole 7a. The driving projection 13 passes through the center of the through hole 7a. The piezoelectric displacement elements 10a and 10b are respectively arranged at the right and the left of the driving projection 13 in the through hole 7a. The paired piezoelectric displacement elements 10a and 10b press the driving projection 13 in opposite directions, and rotate the mounting member 3 in cooperation with each other. Each of upper and lower surfaces 26 of each of the piezoelectric displacement elements 10a and 10b is fixed to the fixed frame 7 through a layer of an adhesive having elasticity such as an adhesive including silicone between an inner upper surface or an inner bottom surface, opposite thereto, of the through hole 7a. On the other hand, respective left and right side surfaces 27a and 27b of the piezoelectric displacement elements 10a and 10b are not fixed to left and right side surfaces of the driving projection 13 and the through hole 7a.

Even if the driving projection 13 is displaced along the Z-axis by the first driving and fixing member 4, therefore, the fixed frame 7 and the piezoelectric displacement elements 10a and 10b fixed thereto do not restrict the displacement, and the piezoelectric displacement elements 10a and 10b receive no excessive force.

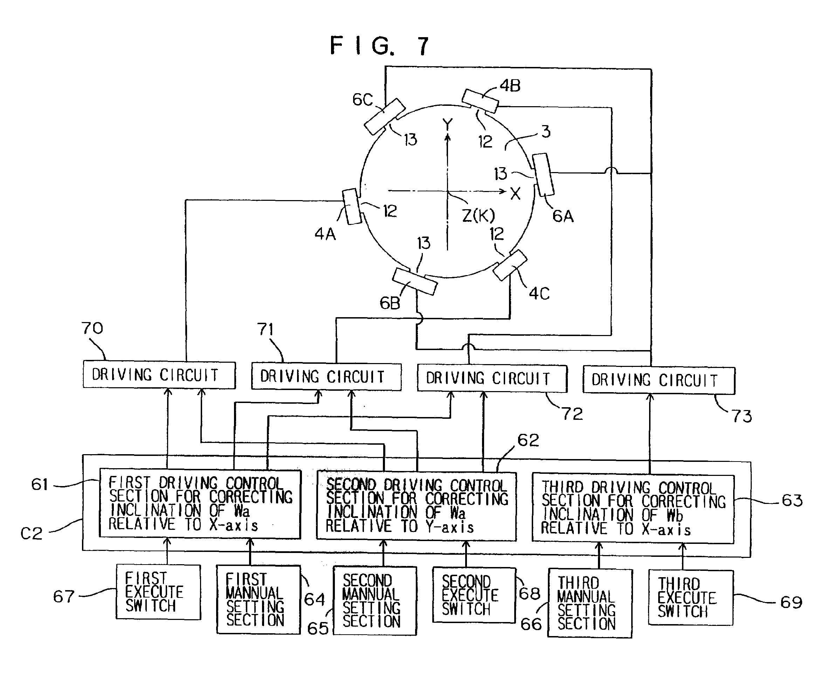

Fig. 7 is a block diagram showing the electrical configuration of the position adjusting apparatus 100 according to the present embodiment. Referring to Fig. 7, in the present embodiment, a microcomputer C2 comprises a first driving control section 61 for correcting the inclination of the work surface Wa relative to the X-axis, a second driving control section 62 for correcting the inclination of the work surface Wa relative to the Y-axis, and a third driving control section 63 for correcting the inclination of the plane Wb perpendicular to the work surface Wa.

A first manual setting section 64 serving as means for manually setting an amount of correction and a first execute switch 67 serving as signal output means are connected to the first driving control section 61, a second manual setting section 65 serving as means for manually setting an amount of correction and a second execute switch 68 serving as signal output means are connected to the second driving control section 62, and third manual setting section 66 serving as means for manually setting an amount of correction and a third execute switch 69 serving as signal output means are connected to the third driving control section 63.

Each of the manual setting sections 64, 65, and 66 comprises a rotation knob or a linear motion knob, as shown in Fig. 1, for example, and a displacement sensor (for example, a potentiometer using a variable resistor or an encoder) for feeding a signal corresponding to the displacement of the knob to the corresponding driving control section 61, 62, or 63. As the manual setting section, a feed button switch composed of a pair of an increase switch for increasing the amount of correction and a decrease switch for decreasing the amount of correction only while it is pressed may be used. In this case, in the driving control section receiving a signal of each of the feed button switches, the amount of correction is increased or decreased only while the increase switch or the decrease switch is pressed, and is displayed on a digital display portion corresponding to the feed button switch, to cause an operator to recognize the set value.

The first driving control section 61 takes, when an ON signal from the first execute switch 67 is inputted thereto, the ON signal as a trigger signal, and applies a voltage corresponding to an amount of correction previously manually entered by the first manual setting section 64 to the first driving and fixing members 4A, 4B and 4C, respectively, through uniquely corresponding driving circuits 70, 71, and 72, to make corrections.

The second driving control section 62 takes, when an ON signal from the second execute switch 68 is inputted thereto, the ON signal as a trigger signal, and applies a voltage corresponding to an amount of correction manually entered by the second manual setting section 65 to the first driving and fixing members 4A, 4B and 4C, respectively, through the corresponding driving circuits 70, 71 and 72, to make corrections.

The third driving control section 63 takes, when an ON signal from the third execute switch 69 is inputted thereto, the ON signal as a trigger signal, and applies a voltage corresponding to an amount of correction previously manually entered by the third manual setting section 66 to the second driving and fixing members 6A, 6B, and 6C, respectively, through the driving circuit 73, to make corrections.

As described in the foregoing, the microcomputer C2 controls the voltage applied to each of the piezoelectric displacement elements 9a, 9b, 10a, and 10b through each of the driving circuits 70 to 73 each including a digital-to-analog (D/A) converter. The voltage to be applied to each of the piezoelectric displacement elements 9a, 9b, 10a, and 10b will be described.

Fig. 5A illustrates a state where the voltages respectively applied to the piezoelectric displacement elements 9a and 9b are zero bolt. At this time, a clearance between each of the piezoelectric displacement elements 9a and 9b and the driving projection 12 is a total of $\Delta t1 \times 2$. That is, the driving projection 12 of the mounting member 3 can be displaced by a maximum of $\Delta t1 \times 2$ in the vertical direction. Each of the piezoelectric displacement elements 9a and 9b must be one in which a displacement of at least $\Delta t1 \times 2$ is obtained. When an applied voltage in a case where the displacement of $\Delta t1 \times 2$ is obtained is taken as V1 bolts, both the piezoelectric displacement elements 9a and 9b in the first driving and fixing member 4 expand by $\Delta t1$ vertically and in opposite directions, as shown in Fig. 5B, when a voltage of V1/2 bolts is applied to both the piezoelectric displacement elements 9a and 9b in the first driving and fixing member 4, for example, to interpose the driving projection 12 of the mounting member 3 from above and below and just fix the position of the driving projection 12 at the center of the range of displacement.

Similarly, referring to Fig. 6, when a total clearance between each of the piezoelectric displacement elements 10a and 10b and the driving projection 13 in a case where both the applied voltages V10a and V10b to the piezoelectric displacement elements 10a and 10b in the second driving and fixing member 10 are zero bolt is taken as $\Delta t2 \times 2$, and an applied voltage required to obtain a displacement of $\Delta t2 \times 2$ is taken as V2 bolts, both the piezoelectric displacement elements 10a and 10b expand by $\Delta t2$ horizontally and in opposite directions when a voltage of V2/2 bolts is applied to both the piezoelectric displacement elements 10a and 10b, for example, to interpose the driving projection 13 from the right and the left and just fix the position of the driving projection 13 at the center of the range of displacement.

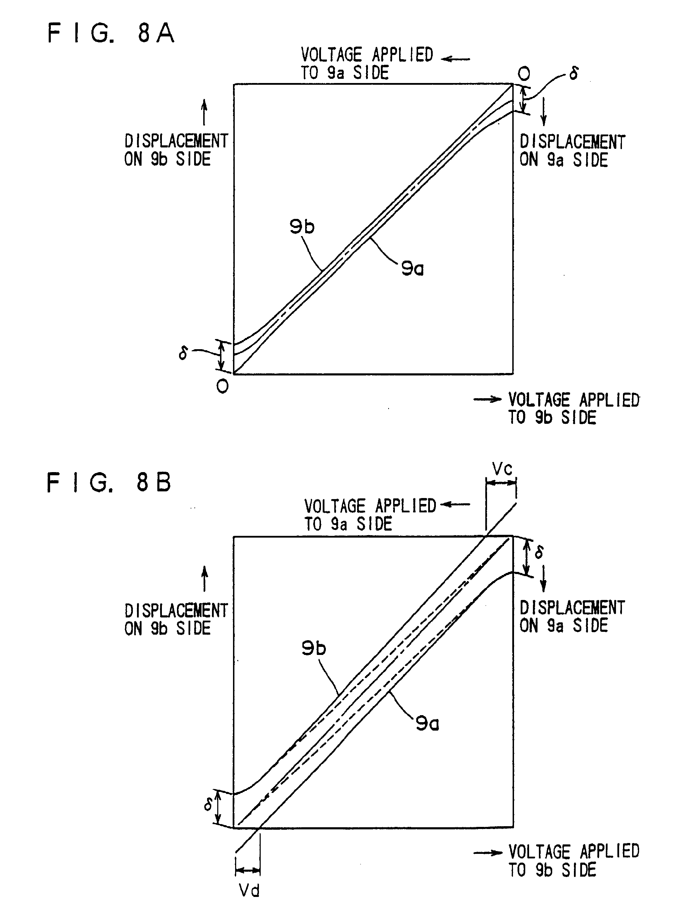

When a voltage is applied once to the piezoelectric displacement elements 9a and 9b (or 10a and 10b), a residual displacement $\delta$ actually occurs even after the voltage is removed. Therefore, the displacement of the driving projection 12 or 13 interposed between both the piezoelectric displacement elements 9a and 9b (or 10a and 10b) may deviate from its proper position, as shown in Fig. 8A. In Fig. 8A, the displacement of the driving projection 12 or 13 is one at an intermediate position (indicated by a one dot and dash line) between the voltage-displacement characteristics of the lower piezoelectric displacement element 9b and the voltage-displacement characteristics of the upper piezoelectric displacement element 9a.

In order to correct the deviation in the displacement which is caused by the residual displacement $\delta$ and improve the linearity of the voltage-displacement characteristics, drive voltages provided with bias voltages Vc and Vd are respectively applied to the piezoelectric displacement elements 9a and 9b, so that the displacement of the driving projection 12 or 13 almost passes through the origin [see Fig. 8B].

The bias voltage for overdriving is not a constant voltage, and is applied such that it increases in proportion to the amount of displacement of the piezoelectric displacement element. That is, in the embodiment shown in Fig. 8B, the bias voltage is zero when the amount of displacement of the piezoelectric displacement element is zero (only the residual displacement $\delta$), and increases as the amount of displacement increases, to be the bias voltage Vc at the time of the maximum displacement.

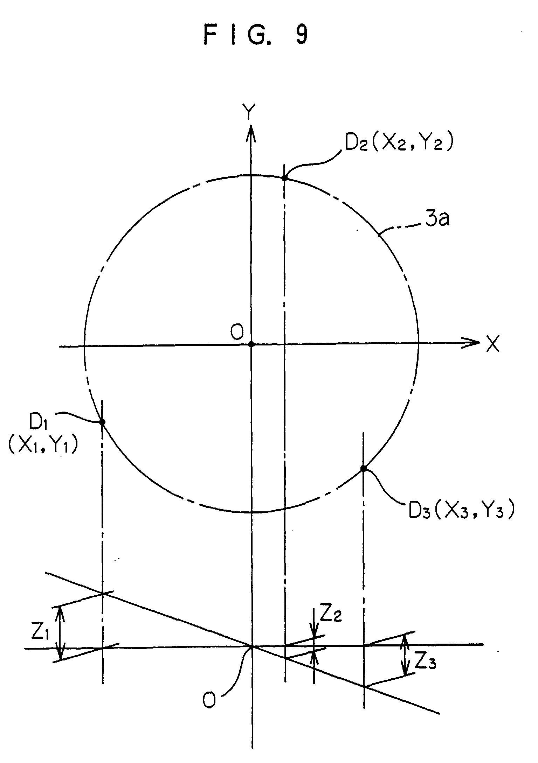

Referring to Fig. 9, the mounting surface 3a of the mounting member 3 is expressed by the following linear equation (1):

$$Z = aX + bY + C \qquad (1)$$

In this equation, a indicates an inclination relative to the X-axis, and b indicates an inclination relative to the Y-axis. The inclination relative to the X-axis is an inclination of a straight line on which a Z - X plane crosses a plane such as the work surface Wa relative to the X-axis. The inclination relative to the Y-axis is an inclination of a straight line on which a Z - Y plane crosses to a plane such as the work surface Wa relative to the X-axis.

If it is assumed that the center of the mounting surface 3a is an origin of coordinates, the following equation (2) is obtained:

$$Z = aX + bY \qquad (2)$$

Only the amount of contribution to the inclination of the mounting surface 3a relative to the X-axis is first paid attention to. When in the above-mentioned equation (2), b is replaced with zero, the following equation (3) is obtained:

$$Z = aX \qquad (3)$$

When the coordinates of portions where the mounting surface 3a crosses the first driving and fixing members 4A, 4B and 4C are respectively taken as D1 $(X_1, Y_1, Z_1)$, $D2(X_1, Y_2, Z_2)$ and $D3(X_3, Y_3, Z_3)$, the amount of displacements of the portions along Z-axis are expressed with the following equations (4), (5) and (6) obtained from the equation (3), respectively:

$$Z_1 = aX_1 \qquad (4)$$

$$Z_2 = aX_2 \qquad (5)$$

$$Z_3 = aX_3 \qquad (6)$$

In the inclination correction, the work surface shall be displaced around the origin which is assumed to be the center of the mounting surface 3a. In the case of the arrangement shown in Fig. 9, the first driving and fixing member 4A having the coordinates D1 drives a portion supporting the mounting member 3 in the opposite direction to the first driving and fixing members 4B and 4C respectively having the coordinates D2 and D3.

Specifically, the amount of operation (the amount of rotation) of the first manual setting section 64 and the magnitude of an absolute value |a| correspond to each other so as to be proportional to each other, and the direction in which the first manual setting section 64 is operated (the direction of rotation) and the direction in which each of the first driving and fixing members 4A, 4B and 4C is driven correspond to each other.

When only the amount of contribution to the inclination of the mounting surface 3a relative to the Y-axis is paid attention to, Z = bY, which is the same as that in the above-mentioned case. The position of the work surface Wa of the work W is thus adjusted upon adjusting the inclination of the mounting surface 3a to a desired inclination.

With respect to the adjustment of the inclination of the plane Wb relative to the X-axis, the amount of operation (the amount of rotation) of the third manual setting section 66 is proportional to the amount of rotation around the Z-axis (an axis K) of the mounting member 3 by each of the second driving and fixing members 6a, 6b, and 6c. The direction in which the third manual setting section 66 is operated (the direction of rotation) corresponds to the direction in which the mounting member 3 is rotated.

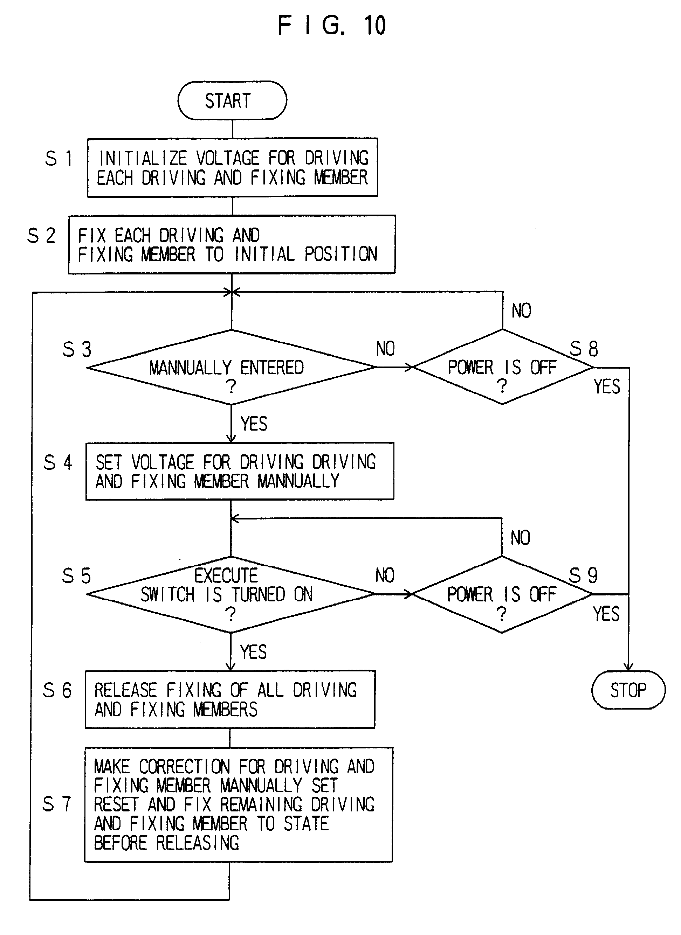

Operations in a case where the position of the work W is adjusted using the position adjusting apparatus 100 will be described on the basis of a flow chart of Fig. 10.

The position adjusting device 1 is mounted by matching perpendicular three axes serving as reference axes of the position adjusting member 1 itself with the X-axis, the Y-axis and the Z-axis serving as reference axes of the machine tool 30. The work W is mounted in a state where it is coarsely positioned with respect to the mounting surface 3a of the mounting member 3 through the centering positioning jig J. For example, the angles of the inclinations of the work surface Wa relative to the X-axis and the Y-axis and the angle of the inclination of the plane Wb relative to the X-axis are approximately 1 degree.

When the power supply of the controller C is turned on, a voltage for driving each of the driving and fixing members 4 and 6 is first initialized, and each of the driving and fixing members 4 and 6 is then fixed to an initial position (home position) previously determined (steps S1 and S2). The initial position may, in some cases, be set to the center of the maximum correction range of each of the driving and fixing members 4 and 6. Each of the driving and fixing members 4 and 6 may be reset to the initial position by providing a reset switch to always press the reset switch when work is started and initializing the voltage for driving the driving and fixing member in response to the turn-on of the reset switch.

On the side of the work position adjusting apparatus, an operator entry standby state occurs at the subsequent step S3. On the other hand, the operator measures any one of the following errors 1), 2) and 3) using the test indicator with respect to the work W which is coarsely positioned as described above:

1) an error in the inclination of the work surface Wa relative to the X-axis,
2) an error in the inclination of the work surface Wa relative to the Y-axis, and
3) an error in the inclination of the plane Wb relative to the X-axis.

When the operator first measures the error in the inclination in the above-mentioned item 1), for example, and manually enters an amount of correction required to correct the error in the inclination using the first manual setting section 64, the voltage for driving each of the first driving and fixing members 4A, 4B and 4C is set upon adding the above-mentioned corresponding amount of correction obtained by using the corresponding equations (4), (5) and (6)(steps S3 and S4). When the first execute switch 67 is turned on (step S5), the fixing of all the driving and fixing members 4 and 6 is released once (step S6). A correction for each of the first driving and fixing members 4A, 4B and 4C is then made and at the same time, each of the remaining second driving and fixing members 6A, 6B and 6C is then reset and fixed to a state immediately before releasing the fixing thereof at the step S6 (step S7). The operations from the step S3 to the step S3 through the step S7 are repeated a plurality of number of times, to contain the error in the inclination in the above-mentioned item 1) in an allowable range.

When the operator then measures the error in the inclination in the above-mentioned item 2), for example, and manually enters an amount of correction required to correct the error in the inclination using the second manual setting section 65, the voltage for driving each of the first driving and fixing members 4A, 4B and 4C is set upon adding the above-mentioned amount of correction (steps S3 and S4). When the second execute switch 68 is turned on (step S5), the fixing of all the driving and fixing members 4 and 6 is released once (step S6). A correction for each of the first driving and fixing members 4A, 4B and 4C is then made and at the same time, each of the remaining second driving and fixing members 6A, 6B and 6C is reset and fixed to a state immediately before releasing the fixing thereof at the step S6 (step S7). The operations from the step S3 to the step S3 through the step S7 are repeated a plurality of number of times, to contain the error in the inclination in the above-mentioned item 2) in an allowable range.

When the operator then measures the error in the inclination in the above-mentioned item 3), and manually enters an amount of correction required to correct the error in the inclination using the third manual setting section 66, the voltage corresponding to the amount of correction for driving each of the second driving and fixing members 6A, 6B and 6C is set (steps S3 and S4). When the third execute switch 69 is turned on (step S5), the fixing of all the driving and fixing members 4 and 6 is released once (step S6). A correction for each of the second driving and fixing members 6A, 6B and 6C is then made and at the same time, each of the remaining first driving and fixing members 4A, 4B and 4C is reset and fixed to a state immediately before releasing the fixing thereof at the step S6 (step S7). The operations from the step S3 to the step S3 through the step S7 are repeated a plurality of number of times, to contain the error in the inclination in the above-mentioned item 3) in an allowable range.

In an entry standby state where the steps S3 and S8 are repeated, or an entry standby state where the step S5 and the step S9 are repeated, a fixed state of each of the driving and fixing members 4 and 6 is maintained until the power supply of the controller C is turned off. A reset switch (not shown) may be used for judgment at the step S8. The program may proceed to the step S3 when the reset switch is not turned on, while proceeding to the step S1 when the reset switch is turned on. The same is true for judgment at the step S9. That is, the program may proceed to the step S5 when the reset switch is not turned on, while proceeding to the step S1 when the reset switch is turned on.

In a case where the amounts of correction by the driving and fixing members are very small, after making the corrections of the driving and fixing members whose amounts of correction are manually set, each of the remaining driving and fixing members may be reset and fixed to a state immediately before releasing the fixing thereof.

In the step in which all the corrections are terminated, the operator may turn on a lock switch (not shown) provided in the controller, to enter a state where entries by the other switches 64 to 69 are not accepted while maintaining the state after adjusting each of the driving and fixing members. This is for preventing the operator from erroneously operating a group of switches after the corrections are terminated, to prevent the position of the work W from being changed again.

In the present embodiment, a person can adjust the position of the work W simply and with significantly high precision even if he or she is not a skilled person by easily applying the apparatus to a general-purpose machine.

Particularly, the piezoelectric displacement elements 9a, 9b, 10a, and 10b having a high load and having a superior response are used. Therefore, a sufficient fixed load for the mounting member 3 can be obtained, and can be quickly adjusted. The apparatus has flexibility because it can select and use a piezoelectric displacement element having a desired amount of displacement.

Furthermore, the mounting member 3 is displaced while interposing the driving projection 12 or 13 of the mounting member 3 between the corresponding piezoelectric displacement elements (9a and 9b) or (10a and 10b) on both side. Therefore, the mounting member 3 can be adjusted with high precision.

Although in the above-mentioned embodiment, the errors in the inclination in the above-mentioned items 1), 2) and 3) are individually corrected, the corrections for correcting the errors in the inclination in the above-mentioned items 1) and 2) may be simultaneously made.

Alternatively, the corrections in the above-mentioned items 1), 2) and 3) may be simultaneously made. Strictly speaking, the degree of parallelization can be only corrected with high precision after the inclination of the work surface Wa is corrected. However, the amount of correction itself is at a significantly small level. Therefore, the effect of the correction of the inclination of the work surface Wa on the degree of parallelization of the plane Wb is at a level which may be substantially ignored. Accordingly, the latter simultaneous corrections can be made.

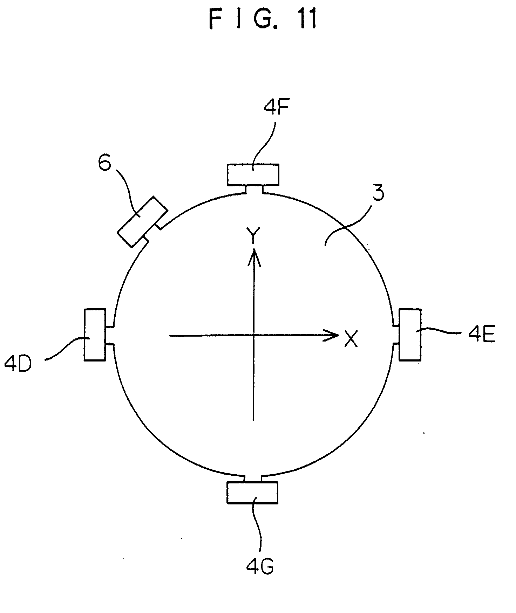

As in an embodiment shown in Fig. 11, when a pair of first driving and fixing elements 4D and 4E is arranged along the X-axis, and a pair of first driving and fixing elements 4F and 4G is arranged along the Y-axis, only the former first driving and fixing elements 4D and 4E are driven in order to adjust an inclination relative to the X-axis, and only the latter first driving and fixing elements 4F and 4G are driven in order to adjust an inclination relative to the Y-axis.

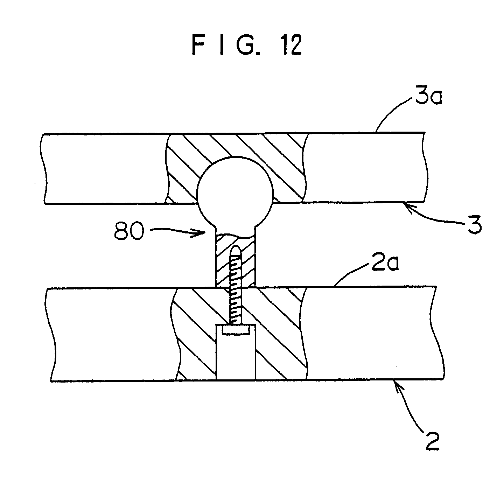

The present invention is not limited to each of the above-mentioned embodiments. For example, the center of a mounting member 3 may be supported on a base 2 through a spherical bearing 80, as shown in Fig. 12, for example.

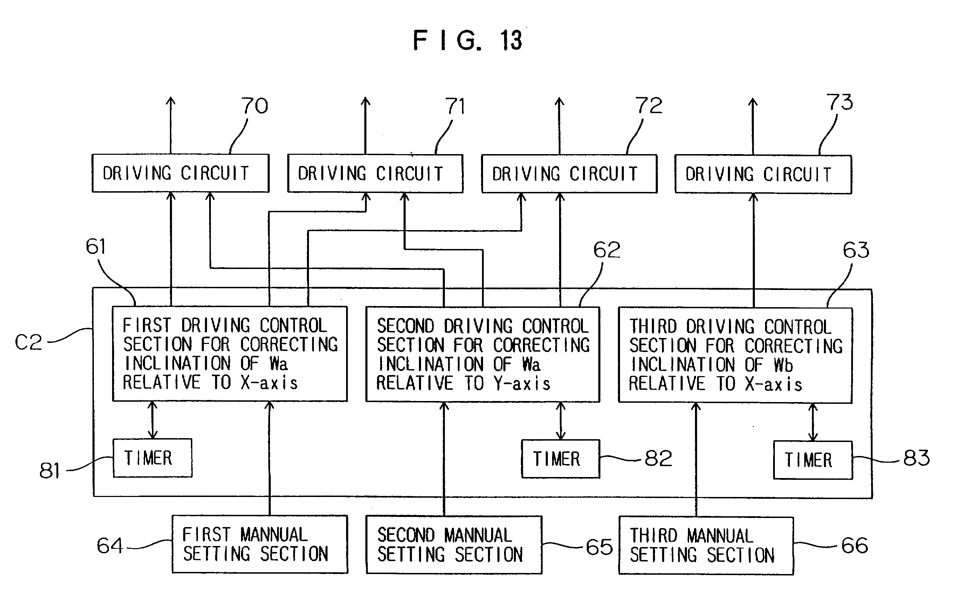

As the means for outputting the trigger signal for making the correction by each of the correction means, the execute switches 67 to 69 may be respectively replaced with timers 81, 82, and 83 provided inside a controller C, as shown in Fig. 13. Each of the timers 81, 82, and 83 outputs, when the operation of the corresponding manual setting section 64, 65, or 66 is not performed for not less than a predetermined time period, a trigger signal, considering that the entry of an amount of correction is terminated. The timers may be composed in software or hardware.

The present invention is applicable to not only a machine tool for performing cutting processing, for example, a general-purpose milling cutter but also all machine tools required to set the position of the work with high precision, for example, an electric discharge machine.

As the first and second driving and fixing members 4 and 6, the piezoelectric displacement elements can be replaced with supermagnetostrictive elements. Examples of the supermagnetostrictive elements include a rare earth magnetic material having large magnetostriction, for example, an alloy including Tb - Dy - Fe. The supermagnetostrictive element can be used without any cable because it produces a displacement in no contact depending on the change in an external magnetic field. Further, the supermagnetostrictive element has a larger output and a larger displacement, as compared with those in the piezoelectric displacement element, and the weight thereof per unit stress is small. When the supermagnetostrictive elements are used, therefore, a sufficiently large amount of displacement can be ensured even if they are made small in size, and the position of the work can be stably maintained upon withstanding a larger cutting load.

Furthermore, it is also possible to replace the piezoelectric displacement elements with fluid pressure cylinders using fluid pressure such as oil pressure. Further, it is also possible to use elements capable of controlling an amount of displacement by adjusting the temperature.

Each of the execute switches may be abolished, to make a correction in the amount of correction set by each of the manual setting sections in real time.

In addition thereto, various changes can be made in the range of the present invention.

Although the present invention has been described and illustrated in detail, it is clearly understood that the same is by way of illustration and example only and is not to be taken by way of limitation, the spirit and scope of the present invention being limited only by the terms of the appended claims.

**Claims**

1. A work position adjusting apparatus (100) for adjusting the position of a work (W) having first and second surfaces (We, Wb) crossing each other based upon first, second and third axes (X, Y, Z) perpendicular to each other which are set in a machine tool (30) with respect to a relative motion between a tool head (44) and a work table (31), comprising:

   a base (2) set on the work table (31);
   a mounting member (3) on which said work (W) is mounted;
   supporting means (4A, 4B, 4C, 6A, 6B, 6C; 80) interposed between the base (2) and the mounting member (3) for supporting the mounting member (3),

     characterized by

   said supporting means (4A, 4B, 4C, 6A, 6B, 6C; 4A-4D, 6; 80) comprising first correction means (4A, 4B, 4C; 4A-4D) for correcting an inclination of said first surface (Wa) relative to a plane including the first and second axes (X, Y) by driving the mounting member (3) in a direction parallel to the third axis (Z), and second correction means (6A, 6B, 6C; 6) for correcting an inclination of said second surface (Wb) relative to the first axis (X) by rotating the mounting member (3) around an axis (K) parallel to the third axis (Z);
   control means (C2) for controlling the operation of each of said first and second correction means (4A, 4B, 4C, 6A, 6B, 6C; 4A-4D, 6); and manual adjustment means (64, 65, 66, 67, 68, 69; 81, 82, 83) for manually adjusting an amount of correction by each of said first and second correction means (4A, 4B, 4C, 6A, 6B, 6C; 4A-4D, 6) through the control means (C2).

2. The work adjusting apparatus of claim 1, characterized in that
   said manual adjustment means (64, 65, 66, 67, 68, 69; 81, 82, 83) comprise manual setting means (64, 65, 66) for manually setting the amount of correction by the corresponding correction means (4A, 4B, 4C, 6A, 6B, 6C; 4A-4D, 6), and signal output means (67, 68, 69; 81, 82, 83) for outputting a trigger signal for executing a correction by the corresponding correction means (4A, 4B, 4C, 6A, 6B, 6C; 4A-4D, 6) by an amount of correction set using the manual setting means (64, 65, 66).

3. The work position adjusting apparatus of claim 2, characterized in that
   said signal output means (67, 68, 69) comprise switches (67, 68, 69) manually operated.

4. The work position adjusting apparatus of claim 2, characterized in that
   said signal output means (81, 82, 83) comprise timers (81, 82, 83) for outputting said trigger signal after an elapse of a predetermined time period from a time when the setting of the corresponding manual setting means (64, 65, 66) is terminated.

5. The work position adjusting apparatus of any of claims 1 - 4, characterized in that
said mounting member (3) is supported only by the first and second correction means (4A, 4B, 4C, 6A, 6B, 6C; 4A-4D, 6).

6. The work position adjusting apparatus of any of claims 1 - 5, characterized in that
each of said first and second correction means (4A, 4B, 4C; 6A, 6B, 6C; 4A-4D, 6) comprises driving elements (9a, 9b, 10a, 10b) for displacing the mounting member (3) depending on a predetermined amount of input.

7. The work position adjusting apparatus of claim 6, characterized in that
said driving elements (9a, 9b, 10a, 10b) comprise piezoelectric displacement elements (9a, 9b, 10a, 10b) for displacing the mounting member (3) depending on an applied voltage.

8. The work position adjusting apparatus of claim 6, characterized in that
said driving elements (9a, 9b, 10a, 10b) comprise supermagnetostrictive elements for displacing the mounting member (3) depending on the change in a magnetic field.

9. The work position adjusting apparatus of any of claims 1 - 5, characterized in that
each of said first and second correction means (4A, 4B, 4C, 6A, 6B, 6C; 4A-4D, 6) comprises a pair of driving elements (9a, 9b; 10a, 10b) for driving the mounting member (3) in opposite directions.

10. The work position adjusting apparatus of claim 9, characterized in that
said paired driving elements (9a, 9b, 10a, 10b) are arranged opposite to each other with a predetermined portion of the mounting member (3) interposed therebetween.

11. The work position adjusting apparatus of claim 9 or 10, characterized in that
said pair of driving elements (9a, 9b, 10a, 10b) comprises a pair of piezoelectric displacement elements (9a, 9b, 10a, 10b) whose driving voltage is provided with such bias voltage as increases or decreases in proportion to the amount of displacement of each of the piezoelectric displacement elements (9a, 9b, 10a, 10b).

12. A work position adjusting method using a work position adjusting apparatus (100) comprising a base (2), a mounting member (3) on which a work (W) having first and second surfaces (Wa, Wb) crossing each other is mounted, and supporting mechanisms (4A, 4B, 4C, 6A, 6B, 6C; 4A-4D, 6; 80) interposed between the base (2) and the mounting member (3) for supporting the mounting member (3), said supporting means (4A, 4B, 4C, 6A, 6B, 6C; 4A-4D, 6; 80) comprising first correction means (4A, 4B, 4C; 4A-4D) for correcting an inclination of said first surface (Wa) relative to a plane including the first and second axes (X, Y) by driving said mounting member (3) in a direction parallel to the third axis (Z), and second correction means (6A, 6B, 6C; 6) for correcting an inclination of said second surface (Wb) relative to the first axis (X) by rotating the mounting member (3) around an axis (K) parallel to the third axis (Z), control means (C2) for controlling the operation of each of said correction means (4A, 4B, 4C, 6A, 6B, 6C; 4A-4D, 6), and manual adjustment means (64, 67, 65, 68, 66, 69) provided in correspondence with each of the correction means (4A, 4B, 4C, 6A, 6B, 6C; 4A-4D, 6) for manually adjusting an amount of correction by said correction means (4A, 4B, 4C, 6A, 6B, 6C; 4A-4D, 6) through the control means (C2), comprising the steps of:

detecting an amount related to the inclination of the first surface (Wa) of the work (W) relative to the plane including the first and second axes (X, Y) using a test indicator (46), a probe (48) of which is brought into contact with said first surface (Wa) in a state that the work (W) is mounted on the mounting member (3);
setting the amount of correction by the first correction means (4A, 4B, 4C; 4A-4D) required to correct the detected inclination of said first surface (Wa) using the corresponding manual setting means (64, 65); making a correction by the first correction means (4A, 4B, 4C; 4A-4D) in the amount of correction set by the corresponding manual setting means (64, 65) upon receipt of a trigger signal from the corresponding signal output means (67, 68);
detecting an amount related to the inclination of the second surface (Wb) relative to the first axis (X) using the test indicator (46) the probe (48) of which is brought into contact with the second surface (Wb);
setting the amount of correction by the second correction means (6A, 6B, 6C; 6) required to correct the detected inclination of said second surface (Wb) using the corresponding manual setting means (66); and
executing a correction by the second correction means (6A, 6B, 6C; 6) by the amount of correction set using the corresponding manual setting means (66) upon receipt of a trigger signal from the corresponding signal output means (69).

# FIG. 1

EP 1 043 117 A2

F I G. 2

F I G. 3

F I G. 4 A

F I G. 4 B

EP 1 043 117 A2

FIG. 5A

FIG. 5B

17

EP 1 043 117 A2

F I G.  6

18

# FIG. 7

EP 1 043 117 A2

F I G. 8 A

F I G. 8 B

F I G. 9

# F I G. 10

START

S 1 | INITIALIZE VOLTAGE FOR DRIVING EACH DRIVING AND FIXING MEMBER

S 2 | FIX EACH DRIVING AND FIXING MEMBER TO INITIAL POSITION

S 3 — MANNUALLY ENTERED ? — NO → S 8 — POWER IS OFF ? — NO ↑

YES ↓

S 4 | SET VOLTAGE FOR DRIVING DRIVING AND FIXING MEMBER MANNUALLY

S 5 — EXECUTE SWITCH IS TURNED ON ? — NO → S 9 — POWER IS OFF ? — NO

YES ↓

YES → STOP

S 6 | RELEASE FIXING OF ALL DRIVING AND FIXING MEMBERS

S 7 | MAKE CORRECTION FOR DRIVING AND FIXING MEMBER MANNUALLY SET RESET AND FIX REMAINING DRIVING AND FIXING MEMBER TO STATE BEFORE RELEASING

22

# F I G. 11

EP 1 043 117 A2

F I G. 12

80

3a

3

2a

2

24

EP 1 043 117 A2

# F I G. 14

F I G. 15